Europäisches Patentamt

European Patent Office

Office européen des brevets

(11) Veröffentlichungsnummer: **0 331 024 A2**

## (12) EUROPÄISCHE PATENTANMELDUNG

(21) Anmeldenummer: 89103232.8

(51) Int. Cl.⁴: **B29D 31/00 , A41D 19/04**

(22) Anmeldetag: 24.02.89

(30) Priorität: 04.03.88 DE 3807092

(43) Veröffentlichungstag der Anmeldung:
06.09.89 Patentblatt 89/36

(84) Benannte Vertragsstaaten:
AT BE CH DE ES FR GB GR IT LI LU NL SE

(71) Anmelder: **KÄCHELE-CAMA LATEX GMBH**
**Industriepark Rhön**
**D-6405 Eichenzell 2(DE)**

(72) Erfinder: **Bock, Manfred, Ing. grad.**
**Wiechertstr. 2**
**D-6411 Künzell(DE)**

(74) Vertreter: **Schlagwein, Udo, Dipl.-Ing.**
**Anwaltsbüro Ruppert & Schlagwein**
**Frankfurter Strasse 34**
**D-6350 Bad Nauheim(DE)**

(54) Verfahren zur Herstellung eines Arbeitsschutzhandschuhs.

(57) Ein Arbeitsschutzhandschuh für den Elektrobereich wird im Spritzgußverfahren hergestellt. Hierbei wird in einer Spritzgußform plastisches Material von zwei gegenüberliegenden Seiten her über einen Angußflansch eingespritzt. Dieser Angußflansch wird nach dem Ausformen des Arbeitsschutzhandschuhes von ihm abgeschnitten.

Fig. 1

EP 0 331 024 A2

# Verfahren zur Herstellung eines Arbeitsschutzhandschuhs

Die Erfindung bezieht sich auf ein Verfahren zur Herstellung eines Arbeitsschutzhandschuhs, insbesondere für den Elektrobereich, bei dem unter hohem Druck plastisches Material in eine eine Kernhand aufweisende Form gespritzt wird.

Üblicherweise werden Arbeitsschutzhandschuhe aus Kautschuk im Tauchverfahren hergestellt. Im Tauchverfahren lassen sich ohne Schwierigkeiten gleichmäßige Wandstärken erzielen. Sind für den Elektrobereich größere Wandstärken erforderlich, um eine elektrische Isolationswirkung zu erzielen, so kann man den Tauchvorgang mehrmals wiederholen, so daß sich die Wandstärke mit jedem Arbeitsgang erhöht.

Wenn man einen Arbeitsschutzhandschuh im Spritzgußverfahren herstellen will, dann bereitet das Erzielen einer gleichmäßigen Wandstärke Schwierigkeiten. Ist ein Arbeitsschutzhandschuh beispielsweise für den Elektrobereich bestimmt und soll den Benutzer vor Spannungen bis beispielsweise 40 kV schützen, dann darf seine Wandstärke an keiner Stelle ein Mindestmaß unterschreiten, weil es dort zu elektrischen Spannungsdurchschlägen kommen könnte. Abgesehen vom Problem des Unterschreitens von Mindestwandstärken kommt es beim Spritzgußverfahren relativ leicht zu Lufteinschlüssen, wodurch ebenfalls die Isolationswirkung vermindert wird. Auch der Bereich der Trennfuge wäre bei solchen im Spritzgußverfahren hergestellten Arbeitsschutzhandschuhen kritisch. Deshalb gibt es für den Elektrobereich bislang nur durch Tauchen erzeugte Sicherheitshandschuhe.

Der Erfindung liegt die Aufgabe zugrunde, ein Spritzgußverfahren der eingangs genannten Art zu Herstellung von Arbeitsschutzhandschuhen zu entwickeln, mit dem sich sehr gleichmäßige, größere Wandstärken erzielen lassen, so daß der Arbeitsschutzhandschuh als Sicherheitshandschuh für den Elektrobereich verwendbar ist.

Diese Aufgabe wird erfindungsgemäß dadurch gelöst, daß innerhalb einer eine fliegend an der Seite der Handschuhmanschette gelagerte Kernhand aufweisenden Spritzgußform der Arbeitsschutzhandschuh mit einem sich seiner Handschuhmanschette anschließenden Angußflansch erzeugt wird, indem das Material an zumindest zwei gegenüberliegenden Stellen über Angußkanäle dem Angußflansch zugeführt wird und sich bis zu den Fingerkuppen gleichmäßig in der Spritzgußform verteilt und daß nach dem Vernetzen des Materials und dem Entformen des Arbeitsschutzhandschuhes der Angußflansch mit seinen Angüssen vom Arbeitsschutzhandschuh abgeschnitten wird.

Dadurch, daß gemäß der Erfindung am Arbeitsschutzhandschuh ein Angußflansch vorgesehen und an zwei gegenüberliegenden Seiten eingespritzt wird, verteilt sich das plastische Material in der Form sehr gleichmäßig, ohne die Kernhand nach einer Seite hin zu verschieben, was zu unterschiedlichen Wandstärken führen würde. Da die Angußkanäle nur am Angußflansch und nirgends im Bereich des späteren Arbeitsschutzhandschuhs vorgesehen sind, wird die gleichmäßige Struktur des Arbeitsschutzhandschuhs nicht durch solche Angußkanäle unterbrochen.

Ein besonderer Vorteil des Spritzgußverfahrens gegenüber dem Tauchverfahren liegt darin, daß das Material nicht in Lösungsmitteln gelöst werden muß. Das Spritzgußverfahren ist umweltfreundlicher, weil bei ihm Festkautschuk verarbeitet wird.

Das erfindungsgemäße Verfahren kann mit besonders geringem Aufwand durchgeführt werden, wenn eine aus zwei Formhälften bestehende Spritzgußform verwendet wird und wenn diese Formhälften zum Schließen der Spritzgußform jeweils von einer Seite über die Kernhand gefahren werden.

Lufteinschlüsse lassen sich auf einfache Weise dadurch vermeiden, daß in der Spritzgußform zu den Fingerkuppen führende Absaugkanäle vorgesehen werden, über die während des Spritzens an den Fingerkuppen die dorthin verdrängte Luft abgesaugt wird.

Bei im Spritzgußverfahren hergestellten Teilen erkennt man notwendigerweise den Trennfugenbereich der Spritzgußform. Das kann bei einem Arbeitsschutzhandschuh sehr einfach dadurch vermieden werden, daß der Arbeitschutzhandschuh nach dem Entformen gewendet wird.

Zur weiteren Erläuterung des erfindungsgemäßen Verfahrens ist in der Zeichnung eine Spritzgußform dargestellt und wird nachfolgend erläutert.

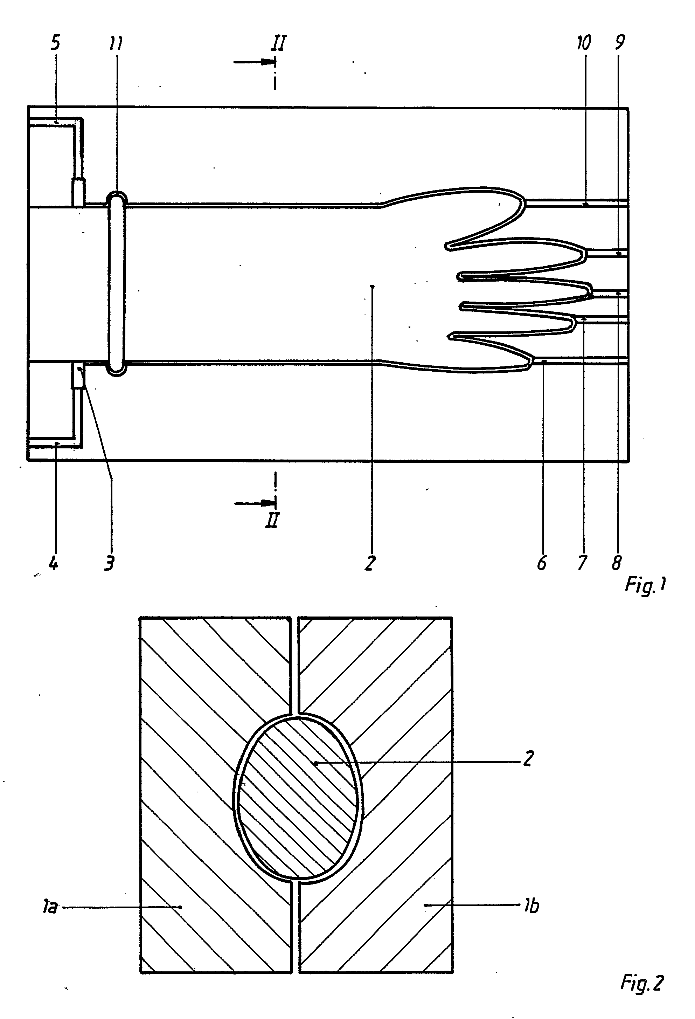

Die Figur 1 zeigt von einer Spritzgußform eine Formhälfte 1, in der eine Kernhand 2 eingesetzt ist. Diese Kernhand 2 ist in der Zeichnung gesehen ausschließlich an der linken Seite, also im Anschluß an die Handschuhmanschette, fliegend gelagert. Die Formhälfte 1 umgibt die Kernhand 2 mit geringem Abstand. In ihr ist am armseitigen Ende des Handschuhs ein Angußflansch 3 geformt, zu dem von oben und unten jeweils ein Angußkanal 4, 5 führt. Über diese Angußkanäle 4, 5 wird das plastische Material in die Spritzgußform eingespritzt. Um die dabei verdrängte Luft abführen zu können, münden im Bereich der Fingerkuppen Absaugkanäle 6 - 10 in den Hohlraum zwischen der Spritzgußform und der Kernhand 2.

Nach dem Spritzen eines Arbeitsschutzhandschuhs wird der Angußflansch 3 hinter einem als Rollrand dienenden, umlaufenden Wulst 11 abgeschnitten, so daß am Arbeitsschutzhandschuh keine Angüsse verbleiben. Durch Wenden des Arbeitsschutzhandschuhes kann man erreichen, daß dieser außenseitig völlig glatt ist und keine Trennfuge zu sehen ist.

Die Schnittdarstellung in Figur 2 verdeutlicht, daß die Spritzgußform aus zwei Formhälften 1a, 1b besteht, welche von der Seite her über die Kernhand greifen und zum Entformen zur Seite hin auseinandergefahren werden.

## Ansprüche

1. Verfahren zur Herstellung eines Arbeitsschutzhandschuhs, insbesondere für den Elektrobereich, bei dem unter hohem Druck plastisches Material in eine eine Kernhand aufweisende Form gespritzt wird, dadurch gekennzeichnet, daß innerhalb einer eine fliegend an der Seite der Handschuhmanschette gelagerte Kernhand aufweisenden Spritzgußform der Arbeitsschutzhandschuh mit einem sich seiner Handschuhmanschette anschließenden Angußflansch erzeugt wird, indem das Material an zumindest zwei gegenüberliegenden Stellen über Angußkanäle dem Angußflansch zugeführt wird und sich bis zu den Fingerkuppen gleichmäßig in der Spritzgußform verteilt und daß nach dem Vernetzen des Materials und dem Entformen des Arbeitsschutzhandschuhes der Angußflansch mit seinen Angüssen vom Arbeitschutzhandschuh abgeschnitten wird.

2. Verfahren nach Anspruch 1, dadurch gekennzeichnet, daß eine aus zwei Formhälften bestehende Spritzgußform verwendet wird und daß diese Formhälften zum Schließen der Spritzgußform jeweils von einer Seite über die Kernhand gefahren werden.

3. Verfahren nach den Ansprüchen 1 oder 2, dadurch gekennzeichnet, daß in der Spritzgußform zu den Fingerkuppen führende Absaugkanäle vorgesehen werden, über die während des Spritzens an den Fingerkuppen die dorthin verdrängte Luft abgesaugt wird.

4. Verfahren nach zumindest einem der vorangehenden Ansprüche, dadurch gekennzeichnet, daß der Arbeitsschutzhandschuh nach dem Entformen gewendet wird.

Fig.1

Fig.2